Europäisches Patentamt

European Patent Office

Office européen des brevets

(19)

(11) Publication number: **0 044 644**
**B1**

# EUROPEAN PATENT SPECIFICATION

(12)

(45) Date of publication of patent specification: **27.07.83**

(21) Application number: **81303030.1**

(22) Date of filing: **02.07.81**

(51) Int. Cl.³: **A 23 G 9/28, A 23 G 9/26**

(54) Improvements in confectionery articles and methods of manufacturing them and apparatus therefor.

(30) Priority: **02.07.80 GB 8021692**

(43) Date of publication of application:
**27.01.82 Bulletin 82/4**

(45) Publication of the grant of the patent:
**27.07.83 Bulletin 83/30**

(84) Designated Contracting States:
**AT BE CH DE FR GB IT LI LU NL SE**

(56) References cited:
**DE - C - 376 317**
**DE - C - 472 249**
**FR - A - 945 646**
**GB - A - 698 814**
**GB - A - 831 028**
**GB - A - 1 128 776**
**US - A - 1 737 919**
**US - A - 1 848 250**
**US - A - 2 123 215**
**US - A - 2 124 387**

(73) Proprietor: **UNILEVER PLC**
**Unilever House Blackfriars P O Box 68**
**London EC4P 4BQ (GB)**
(84) **GB**
(73) Proprietor: **UNILEVER NV**
**Burgemeester s'Jacobplein 1 P.O. Box 760**
**NL-3000 DK Rotterdam (NL)**
(84) **BE CH DE FR IT LI LU NL SE AT**

(72) Inventor: **Kelly, Thomas Reid**
**38 Abbotts Way**
**Wellingborough Northamptonshire (GB)**
Inventor: **Walker, Julian Raymond**
**109 Bower Road**
**Bedford (GB)**

(74) Representative: **Stancliffe, Terence Christopher**
**et al,**
**UNILEVER PLC Patents Division P.O. Box 68**
**Unilever House**
**London EC4P 4BQ (GB)**

Courier Press, Leamington Spa, England

# Improvements in confectionery articles and methods of manufacturing them and apparatus therefor

This invention relates to improvements in confectionery article and methods of manufacturing them and in apparatus therefor. In particular example it relates to the production of frozen confections which have relief features or complex shapes, for example ice confections which have been produced in sculptured moulds.

Various methods for producing such products with eye-appealing features of shape and configuration, e.g. relief or complex shapes are known, for example from GB Patent Specification Nos. 698 814 (Randall) and 1 025 383 (Oldham). GB Specification No. 1 508 589 (Unilever) describes a more recent method, which has been put into commercial use. Among the aesthetic or eye-appealing complex shapes that can be produced by such methods in frozen confection form are forms of human, humanoid or animal-like figures and parts thereof, figures of model aeroplanes, cars, boats, etc, among many possible designs.

Other methods are also known for producing frozen confection forms with interesting attractive appearances given by surface-marked designs, e.g. stencil-spraying, as described in GB Specification No. 2 018 198 (Unilever).

It is however found that it is hard to print or spray accurately on to frozen edible products with relief features, and such accuracy would normally be desirable because the printed or sprayed matter would usually need to be related to the design formed by the relief features.

According to the present invention, contrast of colour or tone is given to different parts of a confectionery articles having surface relief features, by applying to the article a coating of solidifiable material which adheres to the article with sufficiently uneven thickness, and which has a colour or brightness tone of sufficient depth, and of sufficient contrast with the brightness or tone of the uncoated article, that on solidification the coated material forms areas of contrasting colour or tone.

Accordingly, the invention provides an improvement in the process of applying visual pattern or design to an ice confectionery article which comprises applying to the surface of the ice confectionery article a decoration material with a tone or brightness which contrasts with the tone or brightness of the material of which the ice confectionery article is made, the pattern or design being formed by the pattern or design of the distribution of various amounts of the decoration material on the surface of the ice confectionery article, the improvement being characterised in that the decoration material is applied as an overall coating of solidifiable material to an ice confectionery article with surface relief features showing projections and concavities, and in that the solidifiable decoration material is made to adhere to the confectionery article with uneven thickness, and made to solidify to form decorated areas of contrasting tone or brightness, with concavities of the article containing thick coatings of the decoration material to show the characteristic colour or brightness of the decoration material, and the projections of the article bearing thinner contrasting coatings.

Confection products according to the invention can bear concave features of surface relief having therein preferentially thick accretions of coating materials giving colour and/or brightness contrast with other areas of the products.

For example, the coating thickness can be thick enough in concavities of the surface relief of the article to give such concavities substantially the colour or tone of the coating material itself, while in other areas the coating thickness is thin enough to leave a contrasting colour or tone, e.g. a colour or tone substantially similar to that of the uncoated article, i.e. the coating on such other areas can be substantially colourless and transparent.

The coating material can for example be applied by dipping the article in a bath of flowable coating material or by spraying the coating material on, e.g. from a directional spray.

The coating material can have any of a number of combinations of colour or tonal intensity, viscosity, and temperature of application, to ensure the described contrasty result when it is applied by the chosen method.

For example, aqueous coating materials can be applied to frozen confectionery articles by dipping the articles into the liquid coating materials, and allowing excess coating material to drain and the remainder to freeze on to the article.

It has been found that contrasting features of colour or tone can be easily and accurately located by this method in desired association with relief features of an ice confection of complex, e.g. moulded, eye-appealing shape, without the need to bring apparatus for applying such an uneven coating into precise registration with such features.

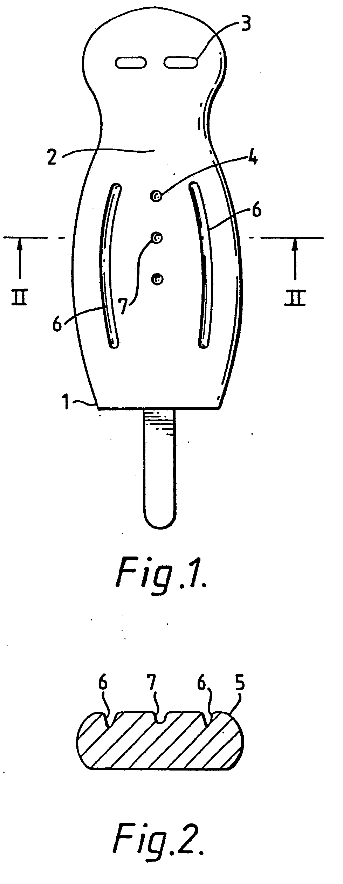

For example, referring to the accompanying diagrammatic drawings, an ice lolly 1 on a stick (shown in plan in Figure 1) can be made to a design in the form of an animal figure 2 with surface texture representing, for example, eyes 3, locks of fur, buttons 4, etc, by the method described in GB Patent Specification No. 1 508 589 using a mould of appropriate design, or otherwise. A desirable colour contrast can be applied by for example first having the body of the lolly frozen from a confection containing mix of conventional type and for example a pale, e.g. yellow, edible colour using a permitted colouring material, and then dipping the frozen lolly in an aqueous coating material coloured by, for example, about 1—2% by weight of (ordinary brown-coloured) caramel and for example up to about 10% total sugar content, or else coloured by e.g. 0.1—0.2% of a permitted colouring material of intense colour, e.g. of red, blue or green colour.

When the aqueous colour coating material is at about 15°C and the ice lollies are at about --18°C to —20°C for example, and the dipping is done for example for a fraction of a second, it is found that the smooth parts (e.g. 5) of the lolly (referring to Figure 2, a diagrammatic section on line II—II in Figure 1) retain only a thickness of for example about 0.1 to 0.14 mm of solidified (frozen) coating material, insufficient to impart deep coloration, while concavities (e.g. 6, 7) acquire thicker coatings, e.g. above about 0.5 mm and up to about 1—5 mm thick, having a deep brown, red, blue or green coloration for example, in striking visual contrast to the (e.g.) predominantly pale yellow colour of the remainder of the lolly.

Appropriate areas of desired colour or tone contrast can of course be arranged by suitable design for the shape of the lolly to be differentially coated. Concavities can be of for example rectangular or triangular transverse section or irregular other forms capable of retaining a desired thickness of for example about 1—5 mm, e.g. 3—4 mm of visually contrasting coating material. Such concavities can for example be of depth approximately equivalent to their width, and will of course be dictated largely by the artistic requirements of whatever design is chosen.

For example, confections in the form of figures having eyes and/or clothing bearing buttons, can be given colour or tonal contrast in regions corresponding to eyes or buttons by making such regions in concave form with a depth of about 1—5 mm, e.g. 3—4 mm, and width about equal to or somewhat larger or smaller than the depth, and applying contrasting coating materials as described herein at least to such concave regions, e.g. by dipping or spraying, so that such materials preferentially solidify in such concave regions to give visual contrast, whether in colour, tone, or both.

After the application of colour or tone- contrast as described, further treatment can of course be given, such as for example a further partial coating to represent a hat for the design figure, either in chocolate or other fatty couverture or in coloured aqueous coating of suitable colour intensity and viscosity.

It is apparent that these methods can be applied on e.g. confectionery freezing machinery having modules or stations of known form, e.g. stick inserting, moulding, freezing, dipping and/or spraying stations of known kind, to reach a wider variety of shapes and patterns of product than would previously have been attainable otherwise than by the use of hand- manufacture or potentially by the use of complex precision equipment for applying coatings differentially.

Many modifications and variations can be applied to the process and products described. For example, the invention does not depend at all, of course, on the particular type of design used for the article or the particular moulding or other method used to produce it.

By way of further example, the coating to be applied unevenly to give the contrast may contain or be based on fat. e.g. a couverture of fat and sugar optionally with chocolate or other coloured material. Such a coating can be applied for example to the head region only of a figure with a head, by having such a head region located at the opposite end to that of insertion of a stick by which the article is held during partial dipping of the figure to the extent only of the head region. Such a coating can for example be substantially transparent and be then used to enhance the visual contrast of a subsequent aqueous or non-fat coating applied to the article by rendering it non-adherent to the fat-coated part. Yet further coatings can comprise emulsified material such as milk solids for example.

Generally the coatings can be varied, combined and permuted according to the varying contrasting design concepts to be realised in confection forms bearing surface relief by the aid of this invention.

## Claims

1. An improvement in the process of applying visual pattern or design to an ice confectionery article which comprises applying to the surface of the ice confectionery article a decoration material with a tone or brightness which contrasts with the tone or brightness of the material of which the ice confectionery article is made, the pattern or design being formed by the pattern or design of the distribution of various amounts of the decoration material on the surface of the ice confectionery article, the improvement being characterised in that the decoration material is applied as an overall coating of solidifiable material to an ice confectionery article with surface relief features showing projections and concavities, and in that the solidifiable decoration material is made to adhere to the confectionery article with uneven thickness, and made to solidify to form decorated areas of contrasting tone or brightness, with concavities of the article containing thick coatings of the decoration material to show the characteristic colour or brightness of the decoration material, and the projections of the article bearing thinner contrasting coatings.

2. A process according to claim 1, characterised in that the decoration material is applied by dipping the confectionery article in a bath of coloured flowable decoration material, leaving a coloured thick coating of decoration material in the concavities and a substantially colourless thin layer on the projections.

3. A process according to claim 1, characterised in that the decoration material is applied as an overall spray of flowable decoration material, leaving a coloured thick layer of decoration material in the concavities and a substantially colourless thin layer on the projections.

4. A process according to claim 1 or 2, characterised in that an aqueous overall coating of dark coloured flowable decoration material is applied by dipping the confectionery article into said material to leave a coating with a thickness in the range above about 0.5 mm and up to about 1—5 mm in concavities of the article, and a contrasting thickness of up to about 0.14 mm on projections of the article.

**Revendications**

1. Perfectionnement à la méthode d'application d'un dessin ou marquage visuel sur un article de confiserie glacée, qui consiste à appliquer sur la surface de l'article de confiserie glacée un matériau de décoration ayant une nuance ou luminosité qui contraste avec la nuance ou luminosité de matériau dont est fait l'article de confiserie glacée, le marquage ou dessin étant formé par le marquage ou dessin de la répartition de quantités différentes de matériau de décoration sur la surface de l'article de confiserie glacée, le perfectionnement étant caractérisé en ce que le matériau de décoration est appliqué comme un revêtement global de matériau solidifiable sur un article de confiserie glacée ayant des marques de surface en relief représentant des protubérances et des concavités, et en ce que le matériau de décoration solidifable est fait pour adhérer sur l'article de confiserie avec une épaisseur inégale, et fait pour se solidifier afin de former des zones décorées de nuance ou luminosité contrastante, avec les concavités de l'article contenant des revêtements épais du matériau de décoration pour donner la couleur ou luminosité caractéristique du matériau de décoration, et les protubérances de l'article portant des revêtements contrastants plus minces.

2. Méthode selon la revendication 1, caractérisée en ce que le matériau de décoration est appliqué en plongeant l'article de confiserie dans un bain matériau de décoration coloré fluent, en liassan un revêtement coloré épais de matériau de décoration dans les concavités, et une mince couche pratiquement non colorée sur les protubérances.

3. Méthode selon la revendication 1, caractérisée en ce que le matériau de décoration est appliqué par pulvérisation globale d'un matériau de décoration fluent, laissant une couche colorée épaisse de matériau de décoration dans les concavitiés, et une mince couche pratiquement non colorée sur les protubérances.

4. Méthode selon la revendication 1 ou 2, charactérisée en ce qu'un revêtement global aqueux d'un matériau de décoration fluent de couleur sombre est appliqué en plongeant l'article de confiserie dans ce matériau, afin de laisser un revêtement avec une épaisseur se situant dans la gamme entre au dessus d'environ 0,5 mm et en dessous d'environ 1—5 mm, dans les concavités de l'article, et, sur les protubérances de l'article, une épaisseur contrastante jusqu'à environ 0,14 mm.

**Patentansprüche**

1. Verbesserung des Verfahrens zum Aufbringen eines visuellen Musters oder einer vi-suellen Ausführungsform auf einem Eiskon-fektgegenstand, welches das Aufbringen eines Dekorationsmaterials mit einem Ton oder einer Helligkeit, der bzw. die mit dem Ton oder der Helligkeit des Materials, aus dem der Eiskonfektgegenstand hergestellt ist, kontrastiert, auf die Oberfläche des Eiskonfektgegenstandes umfaßt, wobei das Muster oder die Ausbildungsform durch das Muster oder die Ausbildungsform der Verteilung verschiedener Anteile des Dekorationsmaterials auf der Oberfläche des Eiskonfektgegenstandes gebildet wird, welche Verbesserung dadurch gekennseichnet ist, daß das Dekorationsmaterial als ein Gesamtüberzug aus verfestigbarem Material auf einen Eiskonfektgegenstand mit Oberflächen-reliefmerkmalen aufgebracht wird, welche Vor-sprünge und Vertiefungen zeigen, und daß das verfestigbare Dekorationsmaterial am Konfektgegenstand mit ungleichmäßiger Dicke zum Haften und unter Bildung von dekorierten Flächen mit kontrastierendem Ton oder kontrastierender Helligkeit zum Verfestigen gebracht wird, wobei Vertiefungen des Gegenstandes mit dicken Überzügen des Dekorationsmaterials die charakteristische Farbe oder Helligkeit des Dekorationsmaterials zeigen und die Vor-sprünge des Gegenstandes dünnere kontrastier-ende Überzüge tragen.

2. Verfahren gemäß Anspruch 1, dadurch gekennzeichnet, daß das Dekorationsmaterial durch Eintauchen des Konfektgegenstandes in ein Bad aus gefärbtem fließähigen Dekorationsmaterial aufgebracht wird, wobei ein gefärbter dicker Überzug aus Dekorationsmaterial in den Vertiefungen und eine im wesentlichen farblose dünne Schicht auf den Vorsprüngen zurückbleiben.

3. Verfahren gemäß Anspruch 1, dadurch gekennzeichnet, daß das Dekorationsmaterial als ein Gesamtspray aus fließfähigem Dekorationsmaterial aufgebracht wird, wobei ein gefärbte dicke Schicht aus Dekorationsmaterial in den Vertiefungen und eine im wesentlichen farblose dünne Schicht auf den Vorsprüngen zurückbleiben.

4. Verfahren gemäß Anspruch 1 oder 2, dadurch gekennzeichnet, daß ein wässeriger Gemamtüberzug aus dunklem gefärbten fließbaren Dekorationsmaterial durch Eintauchen

des Konfektgegenstandes in das Material aufgebracht wird, wobei ein Überzug mit einer Dicke im Bereich von mehr als etwa 0,5 mm und bis zu etwa 1 bis 5 mm in den Vertiefungen des Gegenstandes und einer kontrastierenden Dicke von bis zu etwa 0,14 mm auf Vorsprüngen des Gegenstandes zurückbleiben.

Fig.1.

Fig.2.